(19) Europäisches Patentamt
European Patent Office
Office européen des brevets

(11) **EP 4 476 523 B1**

(12) **EUROPEAN PATENT SPECIFICATION**

(45) Date of publication and mention
of the grant of the patent:
**20.05.2026 Bulletin 2026/21**

(21) Application number: **22705141.4**

(22) Date of filing: **07.02.2022**

(51) International Patent Classification (IPC):
**G01N 15/02** *(2024.01)* **G01N 15/14** *(2024.01)*
**G01N 15/0205** *(2024.01)* **G01N 15/1429** *(2024.01)*
**G01N 15/1433** *(2024.01)*

(52) Cooperative Patent Classification (CPC):
**G01N 15/0211; G01N 15/1425; G01N 15/1429;**
**G01N 15/1433;** G01N 2015/0038; G01N 2015/0222;
G01N 2015/1493

(86) International application number:
**PCT/IB2022/051023**

(87) International publication number:
**WO 2023/148528 (10.08.2023 Gazette 2023/32)**

(54) **PARTICLE ANALYSIS**

PARTIKELANALYSE

ANALYSE DE PARTICULES

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(43) Date of publication of application:
**18.12.2024 Bulletin 2024/51**

(73) Proprietor: **Malvern Panalytical Limited**
**Malvern, Worcestershire WR14 1XZ (GB)**

(72) Inventors:
• **ELSAYED, Yahya**
**Malvern Worcestershire WR14 1XZ (GB)**

• **ROGERS, Ian**
**Malvern Worcestershire WR14 1XZ (GB)**
• **SHADBOLT, Mark**
**Malvern Worcestershire WR14 1XZ (GB)**

(74) Representative: **Barker Brettell LLP**
**100 Hagley Road**
**Edgbaston**
**Birmingham B16 8QQ (GB)**

(56) References cited:
**CN-A- 113 433 041** **GB-A- 2 572 707**
**JP-B2- 3 689 276** **US-B2- 8 663 575**

**Description**

TECHNICAL FIELD

The present invention relates to a method of optical particle analysis, and to an apparatus for optical particle analysis.

BACKGROUND

The present invention is pertinent to apparatus and methods for performing nanoparticle tracking analysis ("NTA"), and more generally to any method of optical particle analysis that is sensitive to particle temperature.

Nanoparticle tracking analysis is a relatively recently developed method for the direct and real-time visualisation and analysis of nanoparticles in liquids (see e.g. WO 2003/093801, for example). NTA uses a light source (e.g. a laser) to illuminate particles suspended in a dispersant fluid, and an optical detector to detect light scattered from the particles. Even when particles are too small to image directly, the light scattered from the particles can readily be detected, for example by a camera arranged to detect scattered light.

The scattering from each particle may be tracked, and the Brownian motion of nanoparticles analysed. The size of the particle can be inferred from how it moves. The brightness of the scattering from the particle may also enable heterogenous mixtures of particles to be resolved. NTA can also be used to estimate particle concentration and to estimate a particle size distribution. A particle size distribution profile obtained by NTA is a direct number/frequency distribution.

NTA has become a term of art, recognised by those skilled in the relevant field. There are over 900 scientific papers and presentations referring to data collected using NTA. Further the term is used by, for example, ASTM International (formerly the American Society for Testing and Materials), the Environmental Protection Agency (EPA), the Food and Drug Administration (FDA) and the NIH.

The sizing of individual nanoparticles by NTA is based on the analysis of Brownian motion exhibited by micron and sub-micron particles suspended in a liquid when illuminated by a suitable light source (e.g. laser) such that the light scattered by the particles is detected by a microscopical arrangement which causes some of the light scattered by the particles to be imaged by a video camera.

The average distance moved by any given particle at known time intervals (e.g. the reciprocal of the frame rate of the camera, typically 30 frames per second) is related to particle size through the Stokes-Einstein equation. This requires that the temperature and viscosity of the surrounding liquid are known. The Stokes-Einstein equation is:

$$D = \frac{k_B T}{6\pi\eta r}$$

Where D is the diffusion coefficient of the particle in the dispersant, $k_B$ is Boltzmann's constant, $T$ is the absolute temperature, $\eta$ is the dynamic viscosity of the dispersant and r is the hydrodynamic radius of the particle.

For Nanotracking analysis, the Stokes-Einstein equation can be re-written as:

$$\langle x, y \rangle^2 = \frac{k_B T t_s}{6\pi\eta r}$$

Where $\langle x,y\rangle^2$ is the mean square displacement between successive frames, and $t_s$ is the frame time.

Because Brownian motion is effectively independent of particle mass, particle density and particle optical properties, NTA (like the related technique of Dynamic Light Scattering) is an absolute technique, which benefits from being independent of these particle properties, and from not requiring calibration in use. Because it interrogates particles individually within a suspension (though simultaneously), it is possible to generate high resolution particle size distribution profiles.

Dynamic Light Scattering (DLS), which is sometimes referred to as photon correlation spectroscopy (PCS), is another technique that detects Brownian particle motion and determines particle properties. In DLS, a light source is used to illuminate a sample comprising particles suspended in a diluent fluid. Light scattered by the particles is detected. The intensity of the scattered light varies over time, due to Brownian motion of the illuminated particles. An autocorrelation function can be determined from the time history of scattering intensity. With knowledge of the scattering vector (normally denoted by $q$) the diffusion coefficient $D$ can be determined from the autocorrelation function. For example, it can be shown that for a dilute solution of monodisperse nanoparticles, the normalised autocorrelation function $g^{(1)}(t)$ is related to the scattering vector $q$ and diffusion coefficient according to:

$$g^{(1)}(t) = \exp\left(-q^2 Dt\right)$$

The diffusion coefficient can be related to the particle size via the Stokes-Einstein equation.

GB2572707 discloses a particle physical property measurement device. The device measures the physical properties of the particles on the basis of the temporal change of the scattered light. A cell holder is provided and a measurement cell. A temperature sensor is provided to the measurement cell 10 or the cell holder 20.

The Nanosight LM10 is a particle characterisation instrument comprising an optical prism, which is based on NTA.

Any technique that relies on characterising Brownian particle motion to determine particle properties via the Stokes-Einstein equation will be sensitive to temperature. In general, NTA and DLS instruments include temperature control system that ensure that the sample has a specific and known temperature so that the temperature does not result in errors in the characterisation of the particles.

Although considerable progress has been made in improving the accuracy of temperature control, there is still room for improvement. Minimisation of temperature related errors in particle characterisation is desirable.

SUMMARY

According to a first aspect, there is provided a particle characterisation instrument, comprising the features of claim 1.

The temperature sensor may be disposed at a distance of less than 3mm from the sample. The scattering data may be indicative of the diffusion coefficient of the particles in the diluent. The scattering data may comprise a time history of scattering intensity, or a sequence of images through which individual particles may be tracked.

The sample cell comprises an optical component defining the wall of the sample cell, and the temperature sensor may be disposed in a recess or through hole defined in the optical component.

The particle characterisation instrument may further comprise a thermally conductive potting compound disposed in the recess or through hole and in contact with the temperature sensor and the optical component.

The hole may have been formed by ultrasonic drilling.

The optical component may comprise a surface comprising a metal coated region. The metal coated region may be configured to reflect the scattered light. The surface may comprise an uncoated region. The light beam may be configured to exit the optical component through the uncoated region to enter the sample. The exit position at which the light beam exits the optical component through the uncoated region may be within 5mm of the metal coated region.

The optical component may be configured to refract the light beam so that it is at an angle to the surface of 10 degrees or less, or 5 degrees or less (e.g. parallel to the surface).

The optical component comprises an optical prism, configured to refract the light beam into the sample.

The optical prism may comprise a first (angled) surface through which the light beam enters the prism. The wall may comprise a second (inner) surface in contact with the sample. The optical prism may be configured to refract the light beam into the sample so that the light beam in the sample is at an angle of less than 20 degrees to the second (inner) surface. The first surface may be at an angle of between 10 and 80 degrees (or 50 to 70 degrees) to the inner surface.

The second (inner) surface may be the surface described above (i.e. comprising uncoated and metal coated regions etc).

The light detector may be configured to receives scattered light along a detection optical path. The light detector may comprise any suitable lens and detector arrangement. The light detector may be situated in the far field at normal or high angle to the plane of the surface (e.g. the second (inner) surface and/or the metal coated region of the surface).

The intersection between the detection optical path and the illuminating light beam may define a scattering region. The temperature sensor may be at a distance of less than 20mm from the scattering region. The temperature sensor may be at a distance of less than 15mm from the scattering region. The temperature sensor may be at a distance of at least 5mm (or at least 10mm) from the scattering region. The temperature sensor may be at an offset of at least 5mm (or at least 10mm) from the detection optical path.

The wall of the sample cell may be transparent.

The wall of the sample cell may comprise or consist of a silicate glass (e.g. BK7 or another borosilicate crown glass).

The wall of the sample cell may consist of material with a refractive index, n, of at least 1.5 at a wavelength of 500nm.

The particle characterisation instrument may be configured to perform nanoparticle tracking analysis, NTA or dynamic light scattering, DLS.

The particle characterisation instrument may further comprise an ambient temperature sensor, at least 10mm away from the sample cell and configured to measure an ambient temperature in the region of the sample cell.

The processor may be configured to receive the air temperature and determine a sample temperature responsive to both the output of the temperature sensor and the ambient temperature.

The instrument may comprise a thermal regulator operable to control the temperature of the sample. The instrument may be operable in an ambient corrected temperature mode, in which the thermal regulator is used to match the temperature of the sample to the temperature measured by the ambient temperature sensor.

According to an aspect, there is provided a method or characterising particles according to claim 13.

Further aspects of the method are defined in dependent claims 14 and 15.

BRIEF DESCRIPTION OF THE DRAWINGS

Example embodiments will be described, by way of example only, with reference to the drawings, in which:

Figure 1 shows an embodiment in which the instrument is a nanoparticle tracking analysis instrument and in which the temperature sensor is received in a through hole in a prism;

Figure 2 shows an embodiment in which the instrument is a nanoparticle tracking analysis instrument and in which the temperature sensor comprises a thin film sensor in contact with the sample.

Figure 3 shows an example not belonging to the invention in which the instrument is a dynamic light scattering instrument and in which the temperature sensor is received in a recess in the sample cell; and

Figure 4 shows an example not belonging to the invention in which the instrument is a dynamic light scattering instrument and in which the temperature sensor is received in a heat spreader in contact with the base of the sample cell.

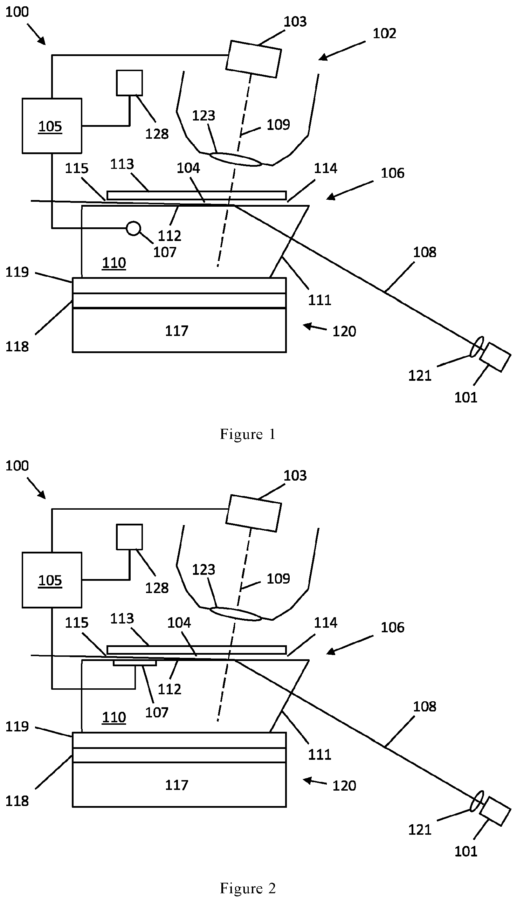

Referring to Figure 1, an NTA instrument 100 according to an embodiment is schematically illustrated. The instrument 100 comprises a light source 101, sample cell 106, light detection system 102 and processor 105.

The light source 101 generates a light beam 108, that is refracted into the sample 104 by a prism 110 which forms part of the sample cell 106. The light beam 108 creates scattered light by interacting with particles of the sample 104. The scattered light from the particles is detected by the light detection system 102, which is typically a conventional microscope with an imaging camera. The light detector 103 of the light detection system 102 is schematically illustrated in Figure 1 (not to scale).

Particles are tracked in each successive frame captured by the light detection system 102, and their diffusion coefficient determined by the processor 105 as discussed in the background to this invention. The prism 110 comprises a through hole or recess in which a temperature sensor 107 is disposed, in close proximity to the sample 104. The temperature sensor 107 thereby provides a relatively accurate measure of the temperature of the sample 104, since the prism 110 is directly in contact with the sample, and the thermal conductivity of the prism is relatively high (e.g. high enough to minimise temperature gradients and subsequent differences in temperature between the temperature sensor 107 and the sample 104).

For each tracked particle, the processor 105 estimates a diffusion coefficient. From the diffusion coefficient, a particle hydrodynamic radius can be determined, using the Stoke-Einstein equation (either on an individual particle basis or on an average or ensemble basis). The Stokes-Einstein equation requires that the temperature of the sample is known. The temperature sensor 107 provides a relatively accurate measurement of the sample temperature, which is used by the processor 105 to determine a relatively accurate estimate of particle size. In addition, the processor 105 may be configured to count the number of particles, in order to provide an estimate of particle concentration. The processor 105 may, for example, determine a particle size distribution based on the concentration of each particle size.

In typical prior art NTA instruments, the temperature used in the Stokes-Einstein equation is generally measured off-sample. Concerns over contamination of the sample usually precludes having the sensor in contact with the sample, in addition to challenges imposed by the small sample volume In typical prior art NTA instruments, the temperature of the sample is inferred from the ambient temperature, or from a temperature sensor on, or close to, a thermal regulator (e.g. a thermoelectric temperature controller). Such solutions to determining the temperature of the sample are generally associated with errors.

In prior art systems that do not employ a prism, it is typically challenging to get the temperature sensor closer than 1cm or 2cm from the sample. Under such circumstances, multiple materials and interfaces are typically present between the temperature sensor and the sample, which makes correcting for temperature offsets due to heat flow challenging and potentially variable between different devices. This is in contrast to the temperature sensor in the present embodiment, which is disposed very close to the sample, and with a single material between the temperature sensor and the sample. The thermal mass of the region of the prism between the temperature sensor and the sample is sufficiently low that there is little thermal lag, and thermal conductivity of the prism material is typically high enough that the steady state offset in temperature is also relatively low.

The use of a prism as part of the sample cell 106 allows the formation of a thin beam for light scattering, and also enables the use of an embedded sensor so that the temperature of the sample 104 can be measured with high accuracy from a location close to the sample 104.

An additional benefit using a prism 110 to refract the light directly onto the liquid sample 104 is that the light may thereby be directed into the sample as a thin sheet. The intersection of the imaging field of the light detection system and the illuminating light beam in the sample define the scattering region in which particles are detected, and the thin light beam enables a compact design and allows the use of microfluidics for introducing the sample to the sample cell, saving on sample volumes.

The light source 101 may be a laser (for example with a visible wavelength, or a wavelength in the range of 380nm to 700nm). The light beam 108 is incident on the prism 110 at the first surface 111. The light beam 108 may be normal to the first surface 111. The light beam 108 exits a second (upper) surface 112 of the prism 110 and is refracted (due to the difference in refractive index between the prism and the diluent comprising the sample). Assuming the light is normal to the first surface 111, the angle between the first surface 111 and the second surface 112 may be selected so that the light beam exits the second surface at a very shallow angle, typically less than 5 degrees, so that it grazes the second surface, or is substantially parallel to the second surface. The diluent may, for example be assumed to be water, and the appropriate angle between the first surface 111 and the second surface 112 selected based on the refractive index of the prism (assuming normal incidence with the first surface). The prism 110 may have a refractive index of at least 1.4, or at least 1.5. The prism 110 may comprise a silicate glass, such as BK7.

The through hole or recess in the prism 110 may be formed using any suitable technique. For example, the hole or recess may be laser machined, or ultrasonically drilled. The applicant has found that ultrasonic drilling a through hole is a particularly suitable approach which does not result in damage to the portion of the prism 110 through which the light beam 108 passes.

In this embodiment, the temperature sensor 107 is approximately 3mm from the second surface 112 of the prism 110, and consequently 3mm from the sample 104. The forming of the hole or recess in the prism 110 may produce microcracking and defects that may scatter light. It is therefore desirable that the temperature sensor 107 is positioned far enough away from the field of view of the light detection system 102 and the illuminating light beam 108 so that it does not contribute to optical noise (by scattering of the illuminating light beam or the light scattered from the particles). In addition, the temperature sensor should be close enough to the scattering region that the temperature measured by the temperature sensor 107 is representative of the temperature of the sample at the scattering region.

In this example, the temperature sensor 107 is placed ~15mm from the scattering region, defined by the intersection of a detection optical path (i.e. the field of view of the microscope in this case) and the illuminating light beam. The temperature sensor 107 is also positioned offset from the axis of the detection optical path 109 by at least 10mm. Similarly, the temperature sensor 107 is placed at least 10mm from the illuminating light beam 108.

The temperature sensor 107 may be any suitable device. For example, a pre-calibrated thermistor may be used (e.g. a negative coefficient thermistor). Such sensors are readily available, accurate, small and low cost.

The upper surface of the prism 110 comprises a metal coated region that reflects scattered light, and a non-metal coated region through which the illuminating light beam 108 exits the prism 110 into the sample 104. The illuminating light beam 108 exits the prism 110 at a position that is close to the metal coated region, for example within 5mm or within 2mm of the metal coated region. The illuminating light beam 108 is refracted into the sample so as to illuminate a region of the sample just above the metal coated region with a beam that is substantially parallel to the metal coated region of the upper surface 112. The metal coated region reflects scattering to the light detection system 102, improving the ease with which scattering from particles can be detected.

The illuminating light beam 108 may be shaped by at least one light shaping optical component 121 that is disposed between the light source 101 and the prism 110. This is schematically illustrated in Figure 1 as a lens element, but the light shaping optical component 121 may comprise a combination of refracting optical element and mirrors in order to shape the light beam 108 from the light source 101 and direct it into the sample cell 106.

The illuminating light beam 108 in the sample 104 may form a sheet of light adjacent to the metal coated region of the upper surface 112. The light beam 108 may be linearly polarised, collimated, symmetrical and thin.

The light detection system 102 is schematically illustrated in Figure 1, as comprising a light detection lens 123 and light detector 103. As already discussed, a typical light detection system suitable for NTA may comprise a fairly standard microscope with imaging camera. For example, a long working distance objective lens may be used with a conventional microscopic optical train and imaging sensor (e.g. CCD, CMOS, etc).

The sample cell 106 comprises cover sheet 113, through which the scattered light from the particles reaches the light detection system 102. The cover sheet may comprise a glass (e.g. a silicate glass or borosilicate glass). The prism 110 and cover sheet 113 together define the sample cell 106 holding the sample 104. The sample cell 106 may comprise part of a flow cell, and have an inlet 114 and outlet 115. The cover sheet 113 may be retained by a plastic element that defines further flow channels communicating the sample to/from the inlet 114 and outlet 115.

The prism 110 is mounted on a thermal regulator 120, which controls the temperature of the sample 104 (e.g. in response to control signals from the processor 105). The thermal regulator 120 comprises a heat sink 117, thermoelectric device 118 and thermal spreader 119. The thermoelectric device 118 is operable to cause heating or cooling using the thermoelectric effect. The heat sink 117 rejects heat generated by the Peltier device 118, and the thermal spreader 119 ensures that heat flow to and from the thermoelectric device 118 is uniformly applied to the prism 110. The thermal spreader 119 may comprise aluminium, or any other material with a high thermal conductivity. Thermal paste may be employed between components of the thermal regulator 120, and between the thermal regulator 120 and the prism 110.

An ambient temperature sensor 128 is provided, for measurement of the ambient air temperature in the region of the sample cell 106.

In some situations, a desired temperature of the sample 104 may be different than the ambient air temperature above the sample cell 106. In such a situation, a temperature gradient may exist between the sample 104 and the temperature sensor 107, because the thermal regulator 120 may be causing heat to flow between the sample and the thermoelectric device 118 to maintain the desired temperature in spite of the ambient temperature. Greater differences in temperature between the sample and the ambient air will tend to result in larger temperature gradients. This temperature gradient can give rise to an error between the temperature reported by the temperature sensor 107 and the temperature of the sample 104. In order to correct for this, an ambient temperature sensor 128 may be arranged to measure the ambient air temperature in the region of the sample cell 106. The ambient air temperature can be used by the processor 105 to correct for errors in the apparent sample temperature measured by the temperature sensor 107, for example using a lookup table, or a mathematical function modelling a correction. In addition or alternatively, the ambient air temperature can enable the temperature of the sample to be set to match that of the ambient air, thereby minimising any heat flows.

The instrument 100 may be operable in two modes: i) an ambient corrected temperature mode; and ii) a temperature controlled mode. In the ambient corrected temperature mode, the thermal regulator 120 is set to maintain the temperature of the sample 104 at the same temperature that is measured by the ambient temperature sensor 128. This minimises any heat flow between the sample 104 and the ambient environment, and consequently minimises any temperature gradient leading to errors between the temperature measured by the temperature sensor 107 and the true temperature of the sample 104. In the temperature controlled mode, the thermal regulator 120 may be used to set any desired temperature for the sample 104, and the processor may correct for temperature errors as described above.

Table 1, below, shows some calculated errors in particle size resulting in errors in sample temperature when measuring 100nm latex particles.

Error in sample temp ---->

**Table 1** - error in sample size (nm) based on temperature errors (degrees C) at different sample temperatures (degrees C)

| Sample temp | 0.05 | 0.1 | 0.3 | 0.5 | 0.75 | 1 | 1.25 | 2 | 3 | 4 |
|---|---|---|---|---|---|---|---|---|---|---|
| 5 | 0.306 | 0.613 | 1.854 | 3.115 | 4.722 | 6.367 | 8.055 | 24.08 | 21.71 | 32.62 |
| 10 | 0.197 | 0.395 | 1.187 | 1.982 | 2.981 | 3.986 | 4.997 | 13.37 | 12.29 | 16.69 |
| 15 | 0.157 | 0.315 | 0.945 | 1.576 | 2.365 | 3.155 | 3.947 | 10.33 | 9.526 | 12.76 |
| 20 | 0.137 | 0.273 | 0.819 | 1.365 | 2.046 | 2.727 | 3.407 | 8.838 | 8.160 | 10.87 |
| 25 | 0.124 | 0.248 | 0.742 | 1.236 | 1.852 | 2.466 | 3.080 | 7.951 | 7.345 | 9.762 |
| 30 | 0.115 | 0.231 | 0.691 | 1.150 | 1.723 | 2.294 | 2.864 | 7.371 | 6.813 | 9.039 |
| 35 | 0.109 | 0.219 | 0.656 | 1.091 | 1.634 | 2.176 | 2.715 | 6.973 | 6.446 | 8.543 |
| 40 | 0.105 | 0.211 | 0.631 | 1.050 | 1.572 | 2.092 | 2.610 | 6.692 | 6.188 | 8.194 |
| 45 | 0.102 | 0.205 | 0.613 | 1.021 | 1.528 | 2.033 | 2.537 | 6.495 | 6.007 | 7.949 |
| 50 | 0.101 | 0.201 | 0.602 | 1.001 | 1.499 | 1.994 | 2.487 | 6.361 | 5.883 | 7.781 |
| 55 | 0.099 | 0.199 | 0.595 | 0.990 | 1.481 | 1.970 | 2.457 | 6.276 | 5.806 | 7.674 |
| 60 | 0.099 | 0.198 | 0.592 | 0.985 | 1.473 | 1.960 | 2.444 | 6.234 | 5.768 | 7.620 |
| 65 | 0.099 | 0.198 | 0.592 | 0.985 | 1.474 | 1.961 | 2.445 | 6.230 | 5.765 | 7.611 |
| 70 | 0.100 | 0.199 | 0.596 | 0.992 | 1.484 | 1.973 | 2.460 | 6.260 | 5.794 | 7.644 |

The impact of errors in temperature are larger at lower temperatures, since the ratio of the error to the temperature is higher. The error in particle size for large temperature errors can be significant, when compared with a typical design objective of <6% for a fill system.

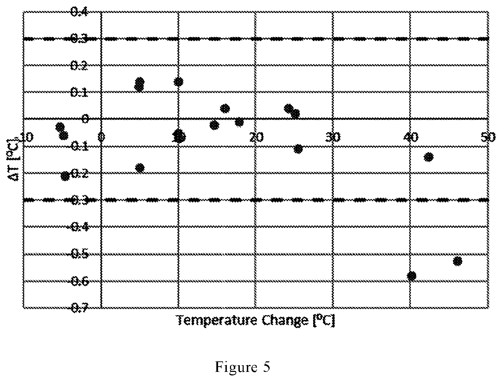

Figure 5 shows a graph demonstrating the sort of accuracy that can be achieved with certain embodiments. To obtain these results, a calibrated and accurate sensor was disposed in contact with the sample, and the error in the temperature measured by the temperature sensor 107 recorded. The temperature errors are well controlled, being generally within 0.3 degrees C with temperature offsets (between the sample temperature and the ambient temperature) ranging from -10 degrees C to 50 degrees C.

Figure 2 shows an alternative embodiment, which is similar to that of Figure 1, except in that the temperature sensor 107 is a thin film sensor that is disposed on the second surface of the prism 110, and therefore in contact with the sample 104. All the features disclosed with respect to Figure 1 are also applicable to Figure 2, except those that relate to the specifics of the temperature sensor 107.

The thin film temperature sensor 107 may, for example, comprise a platinum layer patterned into a resistor, forming a platinum resistance thermometer. A chemically inert thin ($<5\mu$m) passivation layer (e.g. silicon nitride, silicon oxide) may be disposed over the platinum resistance thermometer to reduce interaction with the sample.

This arrangement is potentially even more accurate than that shown in Figure 1, since the temperature sensor 107 is in contact with the sample 104. However, creating a thin film sensor on the prism may be more complex and expensive than simply using a readily available pre-calibrated temperature sensor.

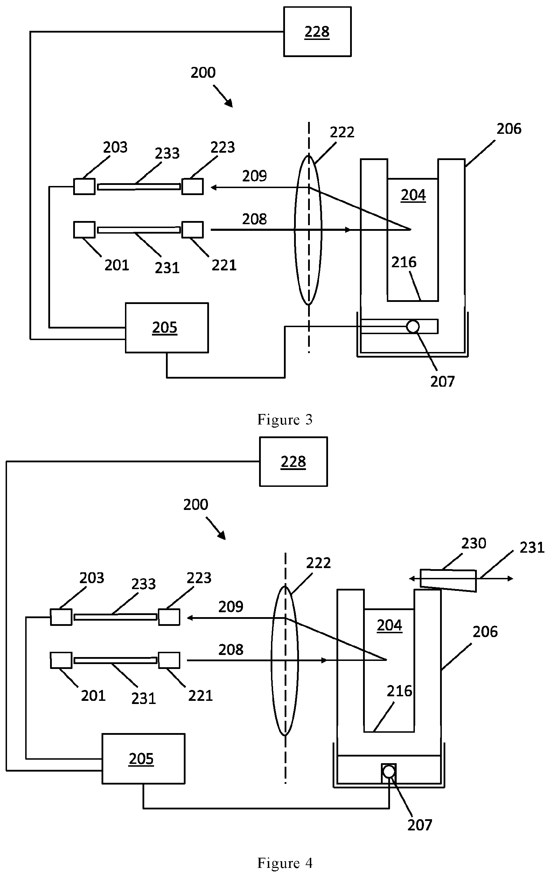

Although the invention is particularly applicable to NTA instruments, it is also applicable to DLS instruments. Figure 3 schematically illustrates a DLS instrument 200 comprising a light source 201, light detector 203, sample cell 206, processor 205 and temperature sensor 207.

The light source 201 may comprise a laser or a light emitting diode, and illuminates the sample 204 in the sample cell 206 with an illuminating light beam 208 via a focussing lens 222 (which may be moveable so as to select a particular position within the sample cell). An illumination optical fibre 233 and fibre coupling lens 223 (e.g. graded refractive index, GRIN, lens) may be provided between the light source and the focussing lens 222. The sample 204 comprises particles suspended in diluent, and the illuminating light beam 208 creates scattered light by its interaction with the particles of the sample. Backscattered light is detected by the light detector 203 via a detection optical path 209 which reaches the light detector 203 via the focussing lens 222, coupling lens 223 and detection optical fibre 233.

More complex detection arrangements for DLS are also possible (for example employing more than one detection path, at different angles, for multi-angle DLS).

The light detector 201 may be a photon counting detector such as an avalanche photodiode. As already discussed in the background, the output from the detector 201 may be processed by the processor 205 to determine a particle property, such as intensity weighted particle average size (Zaverage), polydispersity, and/or a particle size distribution. Such processing may comprise determining an autocorrelation function from a time history of scattering intensity, determining a diffusion coefficient from the autocorrelation function, and then determining a particle size using the Stokes-Einstein equation (which requires, as an input, the temperature of the sample).

Because of the impact of temperature on measurements obtained by DLS, the instrument may comprise temperature control for controlling the sample temperature. For DLS, similar issues exist for temperature measurement to those already discussed with respect to NTA. The state of the art for DLS temperature compensation is similar to that described with reference to NTA - temperature sensors are generally disposed at a relatively large distance from the sample, with concomitant difficulties in accurate sample temperature measurement.

The temperature sensor 207 in the instrument of Figure 3 is disposed at a distance of less than 3mm from the sample, in a recess or through hole in the base wall 216 of the sample cell 206. This approach is similar to that taken in Figure 2. Good thermal contact between the temperature sensor 207 and the sample cell 206 may be ensured using a thermally conductive potting material between the temperature sensor 207 and the sample cell 206. The sample cell 206 comprises a modified standard cuvette (e.g. 1cm x 1cm in cross section). The temperature sensor 207 may comprise connections at the wall of the sample cell 206 that make a connection with contacts in a sample cell holder. The contacts in the sample cell holder may be in communication with the processor 205. Insertion of the sample cell 206 in the sample cell holder may consequently automatically connect the temperature sensor 207 with the processor 205.

In some embodiments, the temperature sensor 207 may not be disposed in a recess defined in the base wall 216 of the sample cell 206. Instead, the temperature sensor 207 may be glued to the base wall 206 using a thermally conductive epoxy. A surface mount type device may be used, and pogo pins used to make contact with fixed contacts on the temperature sensor when the sample cell 206 is disposed in the sample cell holder.

As described with reference to Figure 1, an ambient temperature sensor 228 may be provided that measures the ambient temperature near to the sample cell 206. The processor 205 may employ the same correction approaches (correction of temperature, ambient corrected mode) that have been described with reference to NTA. The DLS instrument may comprise a thermal regulator (e.g. thermoelectric temperature regulator) that is not shown in Figure 3, which may operate similarly to that described with reference to Figure 1.

Figure 4 shows an alternative DLS instrument 200, similar to that shown in Figure 3, with the exception of the temperature sensing arrangement. In Figure 4, instead of the temperature sensor 207 being embedded or affixed to the base wall 216 of the sample cell 206, the temperature sensor 207 is embedded in a heat spreader disposed in thermal contact with the base wall 216 of the sample cell 206 when the sample cell 206 is received in the sample cell holder. An actuator 230 or resilient element (e.g. spring) may be provided to urge the sample cell 206 into the heat spreader to ensure good thermal contact is made therewith. In this way the sample cell 206 can remain a simple cuvette with relatively thin walls, and the temperature sensor 207 can be in close proximity with the sample 204 (e.g. closer than 3mm, or closer than 5mm). The temperature sensor 207 may have a low thermal conductivity path to the sample 204 via the material of the heat spreader (e.g. 1.5 mm of aluminium) and the base wall of the sample cell (which may consist of glass and be ~1mm thick).

Although specific examples have been described, it will be understood that these examples are not intended to be limiting, and that the scope of the invention should be determined with reference to the accompanying claims.

## Claims

1. A particle characterisation instrument (100), comprising:

   a sample cell (106), for holding a sample (104) comprising particles suspended in diluent fluid;
   a light source (101) configured to illuminate the sample (104) with a light beam (108), thereby producing scattered light from the interaction of the light beam (108) with the particles;
   a light detector (103), configured to detect the scattered light and to output scattering data indicative of the diffusion coefficient of the particles in the diluent;
   a processor (105), configured to determine a property of the particles from the scattering data;
   a temperature sensor (107), in conductive thermal contact with a wall of the sample cell (106) and at a distance of less than 5mm from the sample (104);
   wherein the processor (105) is configured to use the output of the temperature sensor (107) in determining the property of the particles such that the property of the particles determined by the processor (105) is responsive to an output from the temperature sensor (107);
   wherein the sample cell (106) comprises an optical component defining a wall of the sample cell (106); and
   wherein the optical component comprises an optical prism (110), configured to refract the light beam into the sample (104).

2. The particle characterisation instrument (100) of claim 1, wherein the temperature sensor (107) is disposed in a recess or through hole defined in the optical component.

3. The particle characterisation instrument (100) of claim 2, further comprising a thermally conductive potting compound disposed in the recess or through hole and in contact with the temperature sensor (107) and the optical component.

4. The particle characterisation instrument (100) of claim 1, wherein the wall comprises an inner surface in contact with the sample (104), and:

   ii) the optical prism (110) comprises a first surface (111) through which the light beam (108) enters the prism, and a second surface (112) in contact with the sample (104), wherein the first surface (111) is at an angle of between 10 and 80 degrees to the second surface (112); and/or
   i) the optical prism (110) may be configured to refract the light beam into the sample so that the light beam (108) in the sample (104) is at an angle of less than 10 degrees to the second surface (112).

5. The particle characterisation instrument (100) of any preceding claim, wherein the light detector (103) is configured to receive scattered light along a detection optical path (109), and the intersection between the detection optical path (109) and the illuminating light beam (108) define a scattering region, and the temperature sensor (107) is at a distance of less than 20mm from the scattering region, and optionally at a distance of at least 5mm from the scattering region.

6. The particle characterisation instrument (100) of any preceding claim, wherein the light detector (103) is configured to receive scattered light along a detection optical path (109), and the temperature sensor (107) at an offset of at least 5mm from the detection optical path (109).

7. The particle characterisation instrument (100) of any preceding claim, wherein the wall of the sample cell (106) comprises or consists of a silicate glass.

8. The particle characterisation instrument (100) of any preceding claim, wherein the wall of the sample cell (106) consists of transparent material with a refractive index, n, of at least 1.5 at a wavelength of 500nm.

9. The particle characterisation instrument (100) of any preceding claim, wherein the particle characterisation instrument (100) is configured to perform nanoparticle tracking analysis, NTA.

**10.** The particle characterisation instrument (100) of any pf claims 1 to 8, wherein the particular characterisation instrument is configured to perform dynamic light scattering, DLS.

**11.** The particle characterisation instrument (100) of any preceding claim, further comprising an ambient temperature sensor (128), at least 10mm away from the sample cell and configured to measure an ambient temperature in the region of the sample cell.

**12.** The particle characterisation instrument (100) of claim 11, wherein:

i) the processor (105) is configured to receive the ambient temperature and determine a sample temperature responsive to both the output of the temperature sensor (107) and the ambient temperature; and/or
ii) the instrument (100) comprises a thermal regulator (120) operable to control the temperature of the sample (104), and the instrument (100) is operable in an ambient corrected temperature mode, in which the thermal regulator (120) is used to match the temperature of the sample (104) to the temperature measured by the ambient temperature sensor.

**13.** A method of characterising particles comprising:

illuminating a sample (104) comprising particles suspended in a diluent fluid with a light beam (108) so as to create scattered light by the interaction of the light beam (108) with the particles;
detecting the scattered light with a light detector (103) to produce scattering data indicative of the diffusion coefficient of the particles in the diluent;
processing the scattering data to determine a property of the particles from the scattering data;
measuring the temperature of the sample (104) using a temperature sensor (107) in conductive thermal contact with a wall of a sample cell (106) containing the sample (104), the temperature sensor (107) is at a distance of less than 5mm from the sample (104);
wherein the processing of the scattering data uses an output from the temperature sensor (107) in determining the property of the particles such that the determined property of the particles is responsive to an output from the temperature sensor (107);
wherein the sample cell (106) comprises an optical component defining a wall of the sample cell (106), and the optical component comprises a prism (110) configured to refract the light beam (108) into the sample (104).

**14.** The method of claim 13, wherein the method comprises performing nanoparticle tracking analysis, NTA

**15.** The method of claim 13, further comprising:

i) receiving a measure of ambient air temperature and determining a sample temperature responsive to both the output of the temperature sensor and the ambient temperature; and/or
ii) using a thermal regulator (120) operable to match the temperature of the sample to an ambient air temperature.

**Patentansprüche**

**1.** Partikelcharakterisierungsinstrument (100), umfassend:

eine Probenzelle (106) zum Halten einer Probe (104), die Partikel umfasst, die in Verdünnungsfluid suspendiert sind;
eine Lichtquelle (101), die dazu konfiguriert ist, die Probe (104) mit einem Lichtstrahl (108) zu beleuchten, wodurch gestreutes Licht aus der Wechselwirkung des Lichtstrahls (108) mit den Partikeln erzeugt wird;
einen Lichtdetektor (103), der dazu konfiguriert ist, das gestreute Licht zu detektieren und Streudaten auszugeben, die den Diffusionskoeffizienten der Partikel in dem Verdünnungsmittel angeben;
einen Prozessor (105), der dazu konfiguriert ist, eine Eigenschaft der Partikel anhand der Streudaten zu bestimmen;
einen Temperatursensor (107), der in leitfähigem thermischem Kontakt mit einer Wand der Probenzelle (106) und in einem Abstand von weniger als 5 mm von der Probe (104) steht;
wobei der Prozessor (105) dazu konfiguriert ist, den Ausgang des Temperatursensors (107) beim Bestimmen der Eigenschaft der Partikel derart zu verwenden, dass die Eigenschaft der Partikel, die durch den Prozessor (105) bestimmt wird, auf einen Ausgang von dem Temperatursensor (107) reagiert;

wobei die Probenzelle (106) eine optische Komponente umfasst, die eine Wand der Probenzelle (106) definiert; und

wobei die optische Komponente ein optisches Prisma (110) umfasst, das dazu konfiguriert ist, den Lichtstrahl in die Probe (104) zu brechen.

2. Partikelcharakterisierungsinstrument (100) nach Anspruch 1, wobei der Temperatursensor (107) in einer Aussparung oder einem Durchgangsloch angeordnet ist, die bzw. das in der optischen Komponente definiert ist.

3. Partikelcharakterisierungsinstrument (100) nach Anspruch 2, ferner umfassend eine thermisch leitfähige Vergußmasse, die in der Aussparung oder dem Durchgangsloch angeordnet ist und mit dem Temperatursensor (107) und der optischen Komponente in Kontakt steht.

4. Partikelcharakterisierungsinstrument (100) nach Anspruch 1, wobei die Wand eine Innenfläche in Kontakt mit der Probe (104) umfasst, und:

ii) das optische Prisma (110) eine erste Fläche (111), durch die der Lichtstrahl (108) in das Prisma eintritt, und eine zweite Fläche (112) in Kontakt mit der Probe (104) umfasst, wobei die erste Fläche (111) in einem Winkel zwischen 10 und 80 Grad zu der zweiten Fläche (112) liegt, und/oder

i) das optische Prisma (110) dazu konfiguriert sein kann, den Lichtstrahl in die Probe zu brechen, so dass sich der Lichtstrahl (108) in der Probe (104) in einem Winkel von weniger als 10 Grad zu der zweiten Fläche (112) befindet.

5. Partikelcharakterisierungsinstrument (100) nach einem vorhergehenden Anspruch, wobei der Lichtdetektor (103) dazu konfiguriert ist, gestreutes Licht entlang eines Detektionsstrahlengangs (109) zu empfangen, und der Schnittpunkt zwischen dem Detektionsstrahlengang (109) und dem Beleuchtungslichtstrahl (108) eine Streuregion definiert und der Temperatursensor (107) in einem Abstand von weniger als 20 mm von der Streuregion und optional in einem Abstand von mindestens 5 mm von der Streuregion liegt.

6. Partikelcharakterisierungsinstrument (100) nach einem vorhergehenden Anspruch, wobei der Lichtdetektor (103) dazu konfiguriert ist, gestreutes Licht entlang eines Detektionsstrahlengang (109) und den Temperatursensor (107) in einem Versatz von mindestens 5 mm von dem Detektionsstrahlengang (109) zu empfangen.

7. Partikelcharakterisierungsinstrument (100) nach einem vorhergehenden Anspruch, wobei die Wand der Probenzelle (106) ein Silikatglas umfasst oder daraus besteht.

8. Partikelcharakterisierungsinstrument (100) nach einem vorhergehenden Anspruch, wobei die Wand der Probenzelle (106) aus einem transparenten Material mit einem Brechungsindex, n, von mindestens 1,5 bei einer Wellenlänge von 500 nm besteht.

9. Partikelcharakterisierungsinstrument (100) nach einem vorhergehenden Anspruch, wobei das Partikelcharakterisierungsinstrument (100) dazu konfiguriert ist, eine Nanopartikel-Tracking-Analyse, NTA, durchzuführen.

10. Partikelcharakterisierungsinstrument (100) nach einem der Ansprüche 1 bis 8, wobei das bestimmte Charakterisierungsinstrument dazu konfiguriert ist, dynamische Lichtstreuung, DLS, durchzuführen.

11. Partikelcharakterisierungsinstrument (100) nach einem vorhergehenden Anspruch, ferner umfassend einen Umgebungstemperatursensor (128), der mindestens 10 mm von der Probenzelle entfernt liegt und dazu konfiguriert ist, eine Umgebungstemperatur in der Region der Probenzelle zu messen.

12. Partikelcharakterisierungsinstrument (100) nach Anspruch 11, wobei:

i) der Prozessor (105) dazu konfiguriert ist, die Umgebungstemperatur zu empfangen und eine Probentemperatur als Reaktion sowohl auf den Ausgang des Temperatursensors (107) als auch die Umgebungstemperatur zu bestimmen; und/oder

ii) das Instrument (100) einen thermischen Regler (120) umfasst, der dazu betreibbar ist, die Temperatur der Probe (104) zu steuern, und das Instrument (100) in einem umgebungskorrigierten Temperaturmodus betreibbar ist, in dem der thermische Regler (120) verwendet wird, um die Temperatur der Probe (104) mit der durch den Umgebungstemperatursensor gemessenen Temperatur abzugleichen.

**13.** Verfahren zum Charakterisieren von Partikeln, umfassend:

Beleuchten einer Probe (104), die Partikel umfasst, die in einem Verdünnungsfluid mit einem Lichtstrahl (108) suspendiert sind, um durch die Wechselwirkung des Lichtstrahls (108) mit den Partikeln gestreutes Licht zu erzeugen;

Detektieren des gestreuten Lichts mit einem Lichtdetektor (103), um Streudaten zu produzieren, die den Diffusionskoeffizienten der Partikel in dem Verdünnungsmittel angeben;

Verarbeiten der Streudaten, um eine Eigenschaft der Partikel aus den Streudaten zu bestimmen;

Messen der Temperatur der Probe (104) unter Verwendung eines Temperatursensors (107) in leitendem thermischem Kontakt mit einer Wand einer Probenzelle (106), die die Probe (104) enthält, wobei sich der Temperatursensor (107) in einem Abstand von weniger als 5 mm von der Probe (104) befindet;

wobei das Verarbeiten der Streudaten einen Ausgang von dem Temperatursensor (107) beim Bestimmen der Eigenschaft der Partikel derart verwendet, dass die bestimmte Eigenschaft der Partikel auf einen Ausgang von dem Temperatursensor (107) reagiert;

wobei die Probenzelle (106) eine optische Komponente umfasst, die eine Wand der Probenzelle (106) definiert, und die optische Komponente ein Prisma (110) umfasst, das dazu konfiguriert ist, den Lichtstrahl (108) in die Probe (104) zu brechen.

**14.** Verfahren nach Anspruch 13, wobei das Verfahren das Durchführen einer Nanopartikelnachverfolgungsanalyse, NTA, umfasst.

**15.** Verfahren nach Anspruch 13, ferner umfassend:

i) Empfangen eines Messwerts für die Umgebungslufttemperatur und Bestimmen einer Probentemperatur als Reaktion sowohl auf den Ausgang des Temperatursensors als auch die Umgebungstemperatur; und/oder

ii) Verwenden eines thermischen Reglers (120), der dazu betreibbar ist, die Temperatur der Probe mit einer Umgebungslufttemperatur abzugleichen.

## Revendications

**1.** Instrument de caractérisation de particules (100), comprenant :

une cellule d'échantillon (106), pour contenir un échantillon (104) comprenant des particules en suspension dans un fluide diluant ;

une source de lumière (101) configurée pour éclairer l'échantillon (104) avec un faisceau lumineux (108), produisant ainsi de la lumière diffusée à partir de l'interaction du faisceau lumineux (108) avec les particules ;

un détecteur de lumière (103), configuré pour détecter la lumière diffusée et pour délivrer en sortie des données de diffusion indicatives du coefficient de diffusion des particules dans le diluant ;

un processeur (105), configuré pour déterminer une propriété des particules à partir des données de diffusion ;

un capteur de température (107), en contact thermique conducteur avec une paroi de la cellule d'échantillon (106) et à une distance de moins de 5 mm de l'échantillon (104) ;

dans lequel le processeur (105) est configuré pour utiliser la sortie du capteur de température (107) lors de la détermination de la propriété des particules de sorte que la propriété des particules déterminée par le processeur (105) est sensible à une sortie provenant du capteur de température (107) ;

dans lequel la cellule d'échantillon (106) comprend un composant optique définissant une paroi de la cellule d'échantillon (106) ; et

dans lequel le composant optique comprend un prisme optique (110), configuré pour réfracter le faisceau lumineux dans l'échantillon (104).

**2.** Instrument de caractérisation de particules (100) selon la revendication 1, dans lequel le capteur de température (107) est disposé dans un évidement ou un trou traversant défini dans le composant optique.

**3.** Instrument de caractérisation de particules (100) selon la revendication 2, comprenant en outre un composé d'enrobage thermiquement conducteur disposé dans l'évidement ou le trou traversant et en contact avec le capteur de température (107) et le composant optique.

**4.** Instrument de caractérisation de particules (100) selon la revendication 1, dans lequel la paroi comprend une surface interne en contact avec l'échantillon (104), et :

ii) le prisme optique (110) comprend une première surface (111) à travers laquelle le faisceau lumineux (108) pénètre dans le prisme, et une seconde surface (112) en contact avec l'échantillon (104), dans lequel la première surface (111) est à un angle compris entre 10 et 80 degrés par rapport à la seconde surface (112) ; et/ou
i) le prisme optique (110) peut être configuré pour réfracter le faisceau lumineux dans l'échantillon de sorte que le faisceau lumineux (108) dans l'échantillon (104) soit à un angle inférieur à 10 degrés par rapport à la seconde surface (112).

5. Instrument de caractérisation de particules (100) selon l'une quelconque des revendications précédentes, dans lequel le détecteur de lumière (103) est configuré pour recevoir de la lumière diffusée le long d'un chemin optique de détection (109), et l'intersection entre le chemin optique de détection (109) et le faisceau lumineux d'éclairage (108) définit une région de diffusion, et le capteur de température (107) est à une distance de moins de 20 mm de la région de diffusion, et facultativement à une distance d'au moins 5 mm de la région de diffusion.

6. Instrument de caractérisation de particules (100) selon l'une quelconque des revendications précédentes, dans lequel le détecteur de lumière (103) est configuré pour recevoir de la lumière diffusée le long d'un chemin optique de détection (109), et le capteur de température (107) est à un décalage d'au moins 5 mm par rapport au chemin optique de détection (109).

7. Instrument de caractérisation de particules (100) selon l'une quelconque des revendications précédentes, dans lequel la paroi de la cellule d'échantillon (106) comprend ou est constituée d'un verre de silicate.

8. Instrument de caractérisation de particules (100) selon l'une quelconque des revendications précédentes, dans lequel la paroi de la cellule d'échantillon (106) est constituée d'un matériau transparent avec un indice de réfraction, n, d'au moins 1,5 à une longueur d'onde de 500 nm.

9. Instrument de caractérisation de particules (100) selon l'une quelconque des revendications précédentes, dans lequel l'instrument de caractérisation de particules (100) est configuré pour réaliser une analyse de suivi de nanoparticules, NTA.

10. Instrument de caractérisation de particules (100) selon l'une quelconque des revendications 1 à 8, dans lequel l'instrument de caractérisation de particules est configuré pour réaliser une diffusion de lumière dynamique, DLS.

11. Instrument de caractérisation de particules (100) selon l'une quelconque des revendications précédentes, comprenant en outre un capteur de température ambiante (128), à au moins 10 mm de distance de la cellule d'échantillon et configuré pour mesurer une température ambiante dans la région de la cellule d'échantillon.

12. Instrument de caractérisation de particules (100) selon la revendication 11, dans lequel :

i) le processeur (105) est configuré pour recevoir la température ambiante et déterminer une température d'échantillon sensible à la fois à la sortie du capteur de température (107) et à la température ambiante ; et/ou
ii) l'instrument (100) comprend un régulateur thermique (120) apte à réguler la température de l'échantillon (104), et l'instrument (100) est apte à fonctionner dans un mode de température corrigée par l'ambiante, dans lequel le régulateur thermique (120) est utilisé pour faire correspondre la température de l'échantillon (104) à la température mesurée par le capteur de température ambiante.

13. Procédé de caractérisation de particules comprenant :

l'éclairage d'un échantillon (104) comprenant des particules en suspension dans un fluide diluant avec un faisceau lumineux (108) de manière à créer de la lumière diffusée par l'interaction du faisceau lumineux (108) avec les particules ;
la détection de la lumière diffusée avec un détecteur de lumière (103) pour produire des données de diffusion indicatives du coefficient de diffusion des particules dans le diluant ;
le traitement des données de diffusion pour déterminer une propriété des particules à partir des données de diffusion ;
la mesure de la température de l'échantillon (104) en utilisant un capteur de température (107) en contact thermique conducteur avec une paroi d'une cellule d'échantillon (106) contenant l'échantillon (104), le capteur de température (107) étant à une distance de moins de 5 mm de l'échantillon (104) ;

dans lequel le traitement des données de diffusion utilise une sortie provenant du capteur de température (107) lors de la détermination de la propriété des particules de sorte que la propriété déterminée des particules est sensible à une sortie provenant du capteur de température (107) ;

dans lequel la cellule d'échantillon (106) comprend un composant optique définissant une paroi de la cellule d'échantillon (106), et le composant optique comprend un prisme (110) configuré pour réfracter le faisceau lumineux (108) dans l'échantillon (104).

**14.** Procédé selon la revendication 13, dans lequel le procédé comprend la réalisation d'une analyse de suivi de nanoparticules, NTA.

**15.** Procédé selon la revendication 13, comprenant en outre :

i) la réception d'une mesure de température de l'air ambiant et la détermination d'une température d'échantillon sensible à la fois à la sortie du capteur de température et à la température ambiante ; et/ou

ii) l'utilisation d'un régulateur thermique (120) apte à faire correspondre la température de l'échantillon à une température de l'air ambiant.

Figure 1

Figure 2

Figure 3

Figure 4

Figure 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2003093801 A

- GB 2572707 A